# EUROPEAN PATENT SPECIFICATION

(11) **EP 4 166 837 B1**
(45) Date of publication and mention of the grant of the patent: **26.03.2025**
(21) Application number: 21202494.7
(22) Date of filing: 13.10.2021
(51) Int. Cl.: F16L 57/00, B65D 59/06

(54) **A PROTECTOR ASSEMBLY AND ASSOCIATED METHOD FOR PROTECTING A THREADED PIPE**
SCHUTZVORRICHTUNG UND ZUGEHÖRIGES VERFAHREN ZUM SCHUTZ EINES GEWINDEROHRES
ENSEMBLE DE PROTECTION ET PROCÉDÉ ASSOCIÉ DE PROTECTION D'UN TUYAU FILETÉ

(43) Date of publication of application: 19.04.2023
(73) Proprietor: Tenaris Connections B.V., 1019 GM Amsterdam (NL)
(72) Inventor: EGGER, Pablo, 1019 GM Amsterdam (NL); ZABALOY, Julian Ignacio, 1019 GM Amsterdam (NL); MANTOVANO, Luciano Omar, 1019 GM Amsterdam (NL); MAZZAFERRO, Gastón Mauro, 1019 GM Amsterdam (NL)
(74) Representative: Boult Wade Tennant LLP

(56) References cited:
- EP-A1- 3 526 439
- CN-U- 203 023 730
- US-A1- 2018 135 792

## Description

The following describes a protector assembly for covering a pin of a threaded pipe and a method for assembling such a protector assembly. Such assemblies and methods can find utility in the protection of threaded connectors used in the oil industry. In particular, those threaded connectors known as premium connections, which comprise a pipe terminating at one end in a pin, which is a male threaded structure, for threaded engagement with a box, which is a female threaded structure configured to receive the pin. A box may be formed at the opposite end of the pipe, or the pipe may have a pin at both ends. When the pipe has a pin at both ends, a separate short coupling may be provided that has a box at both ends for connecting together two pipes.

It is known to cover the pin during storage in order to protect it from impacts or corrosion. Typically, the protection devices used are difficult to install on the pin. There is therefore a need for a simple, easy to assemble protector assembly.

CN203023730U describes a pipeline rapid-plugging device which is provided with a press-against flange and a pipe cap flange. US2018135792A1 describes a universal thread protector is provided for protecting either of the pin and box ends of a pipe. EP3526439A1 describes a sealing device for sealing a free end of a generally tubular object.

Accordingly, the following describes a protector assembly for covering a pin of a threaded pipe, comprising a cover, a retainer and at least one fastener for fastening the retainer to the cover, wherein: the cover includes a tubular portion defining a longitudinal axis from a closed end to an open end, the open end defining a rim for axial abutment with the retainer; the retainer has an abutment face for abutment with the rim; the rim comprises a bore extending therethrough; a fastener extends through the bore of the rim and engages the retainer, the fastener extending substantially in parallel with the longitudinal axis and exposed on the cover side of the bore of the rim for engagement by a tool or user to operate the fastener and wherein: the fastener threadably engages with the bore of the retainer; or the fastener engages the surface of the retainer.

There is also described a method of assembling a protector assembly on a pin of a threaded pipe, comprising the steps of: covering the pin of the threaded connector with a cover having a closed end and an open end defining a rim; engaging the pipe body with a retainer such that the retainer surrounds the pipe body; inserting a threaded fastener through the rim of the cover from the closed end side; and threadably engaging the retainer with the threaded fastener.

When a large number of pipes are stacked for storage or transport, an operator can use the assemblies and methods described herein to cover the end of the pins in the middle of the stack. Using conventional pin covers, this would require reaching awkwardly past the end of the pin to use a tool that will extend perpendicular to the pipe. Of course, when the pipe is in a stack, the use of such a tool is hindered by the neighbouring pipes. The described assemblies and methods can enable an operator to easily cover a pin of a threaded pipe merely accessing the assembly from the cover side, without needing to reach around the cover or use a tool other than at the cover side of the assembly.

For a better understanding of the invention, and to show how the same may be put into effect, reference will now be made, by way of example only, to the accompanying drawings in which:
Figure 1 shows a cross-section of a first embodiment of a protector assembly installed on a pipe in accordance with the invention;
Figure 2 shows a perspective view of the protector assembly of Figure 1;
Figure 3 shows an enlarged region of Figure 1;
Figures 4a to 4c show alternative embodiments of retainers for use in a protector assembly in accordance with the invention;
Figure 5 shows a close-up of an overlap section; and
Figures 6a to 6c show an alternative protector assembly.

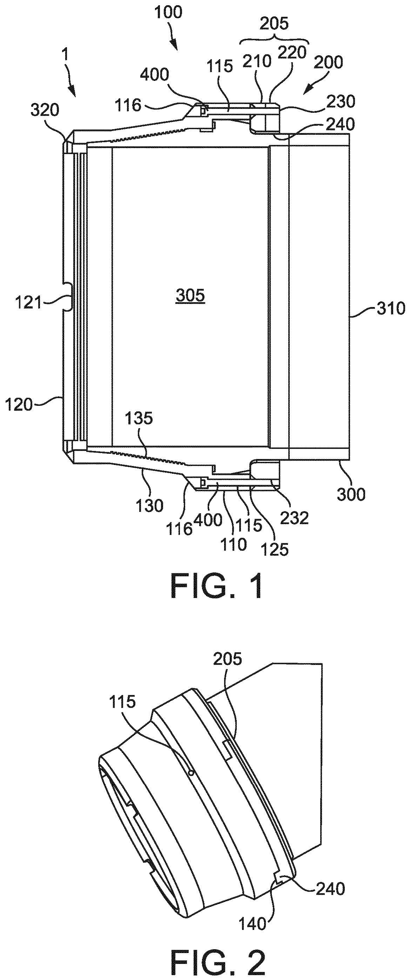

Figures 1 to 3 show a first embodiment of a protector assembly 1 installed on a pipe 300 in accordance with the invention.

As is conventional in the oil and gas industry, the pipe 300 terminates in a pin 305 having a male thread for engagement with a female thread of a box. The protector assembly 1 does not include the pipe 300, but forms a pipe/protector assembly when installed thereon.

The protector assembly 1 comprises a cover 100, a retainer 200 and at least one fastener 400.

The cover 100 and the retainer 200 may be made from plastics, such as polyethylene (e.g., HDPE) or polypropylene.

The cover 100 comprises a tubular portion 130 defining a longitudinal axis from a closed end 120 to an open end 125, the open end 125 defining a rim 110 for axial abutment with the retainer 200.

The rim 110 may be a radial extension around the perimeter of the cover 100.

The tubular portion 130 and closed end 120 are sized and shaped for covering the pin 305 of a pipe 300. In preferred embodiments, the closed end 120 is therefore a circular disc at the end of the tubular portion 130, which is cylindrical, frustoconical, or a combination of cylindrical and frustoconical sections.

Preferably, when intended for covering a pin 305 with a tapered thread, the tubular portion 130 includes a tapered section, which tapers at the same angle as the thread of the pin 305. The end of the pin 305 may abut the inside of the cover 120.

For example, the cover 100 may have an inner surface that is approximately the same shape as at least a portion of the outer surface of the pin 305 that it is intended to cover.

Optionally, the cover 100 comprises an internal coupling thread 135 for engagement with a pin 305. The internal coupling thread 135 may be formed on the inner surface of the tubular portion 130.

Surface features 121 may be provided on the outer surface of the closed end 120 for engaging a tool for rotating the cover 100. This can assist, in particular, for removing the cover 100 from the pin 305.

The rim 110 has an abutment face 150 for abutment with the retainer 200. The rim 110 comprises one or more bores 115 extending therethrough. The bores 115 of the rim 110 may or may not be threaded.

The retainer 200 is arranged to extend radially closer to the longitudinal axis than the rim 110. In this way, when the retainer 200 is fastened to the cover 100 by the fastener 400, the retainer can engage a part of the pin 305, such as a shoulder 350, that the rim 110 would not engage.

The retainer 200 has a circular opening 240 and an abutment face 250 perpendicular to the longitudinal axis (the longitudinal axis extends through the centre of the circular opening 240 and perpendicular to the plane of the circle) for abutment with the abutment face 150 of the rim 110. Preferably, the retainer 200 is ring-shaped.

The retainer 200 comprises one or more bores 230 extending into the abutment face 250. For assisting with the alignment of a fastener 400 during insertion, a tapered opening 235 may be provided in the abutment face 250 to guide the fastener 400 into the bore 230. The bores 230 of the retainer correspond with those of the cover 100.

Preferably, the retainer 200 comprises a threaded bore 230.

The retainer 200 may be formed of a single material having the bores 230 formed therein, such that it is free of inserts. Alternative, inserts such as nuts may be provided to define the (or a part of the) bores 230. Such inserts would preferably be rotationally held within a main body part of the retainer 200. This may be achieved, for example, by having a non-circular shaped cut out (such as a hexagon) complementary to an outer surface of the insert within the main body part of the retainer 200 within which the inserts are held.

In preferred embodiments, the retainer 200 includes a first end 210 and a second end 220.

When installed on a pipe 300, the first end 210 and the second end 220 meet at an overlap section 205. In the overlap section 205, the ends 210, 220 overlap circumferentially. That is, the retainer 200 from first end 210 to second end 220 extends more than 360 degrees around the pipe 300.

The bore 230 of the retainer 200 may extend through the overlap section 205 for enabling a single fastener 400 to both engage the cover 100 with the retainer 200, and engage the first end 210 with the second end 220.

Preferably, the bore 230 is threaded throughout both of the first and second ends 210, 220. However, in some embodiments, the fastener 400 extends through the bore 230 through first end 210 without threadingly engaging the first end 210, and threadably engages the bore 230 through the second end 220 to fasten together the first and second ends 210, 220. In these examples, the second end 220 is further from the cover 100 than the first end 210 (that is, the first end 210 is held between the cover 100 and the second end 220 on the fastener 400).

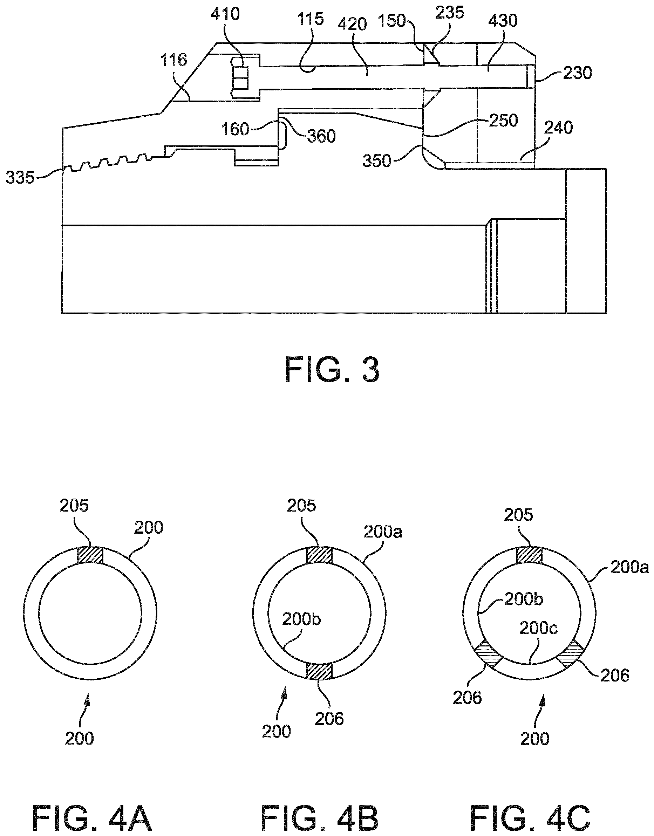

In one preferred embodiment, the retainer 200 is a split ring as shown in Figure 4a. That is, the retainer 200 is a single, continuous piece of material between the first and second ends 210, 220. The retainer may be made of a resilient material such that it can be elastically deformed to separate the first and second ends 210, 220 so that the pipe body 300 can be inserted therebetween.

In another preferred embodiment, the retainer 200 is a ring assembly comprising a first part 200a having the first end 210 and a second part 200b having the second end 220. The first and second parts 200a, 200b can collectively surround a pipe 300. For example, the first and second parts 200a, 200b may be arc-shaped , or generally arc-shaped.

The first and second ends 210, 220 meet to form overlap section 205. The other ends of the first and second parts 200a, 200b meet to form a further overlap section 206. Alternatively, the retainer 200 may include a hinge such that it can be opened and closed around the pipe 300. In such cases, the hinge is not necessarily fastened by a fastener extending through the cover 100.

As will be appreciated, it is not necessary that a retainer 200 formed as a ring assembly be limited to two parts. Multiple parts may be provided. As shown in Figure 4c, three (or more) parts 200a, 200b, 200c may be provided to collectively surround a pipe 300 providing an overlap section 205 between the first and second ends 210, 220 of two of the parts 200a, 200b, and further overlap sections 206 between other ends of the parts 200a, 200b, 200c. For example, the three or more parts 200a, 200b, 200c may be arc-shaped , or generally arc-shaped.

Preferably, the other overlap sections 206 have the same configuration as the overlap section 205 of the first and second ends 210, 220.

As best shown in Figure 2, the first and second ends 210, 220 are shaped so as to define interfitting shoulders that abut in the circumferential direction (that is, the direction around the perimeter of the pipe 300) and overlap to form the overlap section 205.

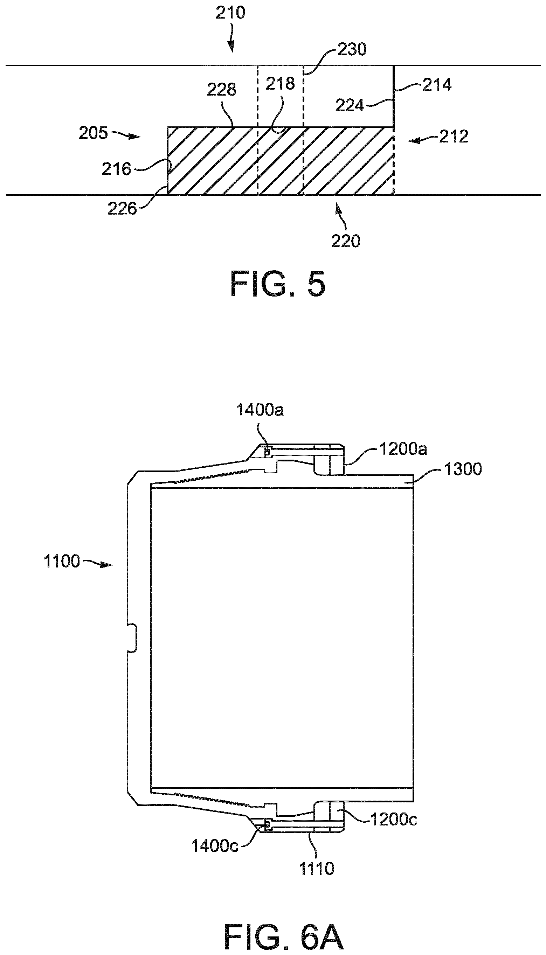

In the particular example shown in Figure 5, the first end 210 of the retainer 200 has a recess 212 shaped to receive the second end 220, while the second end 220 has a recess shaped to receive the first end 210.

The recess of the first end 210 may form an internal shoulder having a surface 216 for circumferential abutment with the tip 226 of the second end 220, and a surface 218 for longitudinal abutment (i.e., perpendicular to the circumferential direction, in line with the longitudinal direction of the cover 100 when the protector assembly 1 is assembled) with a complementary surface 228 of the second end 220. The second end 220 is formed in a complementary way, with an internal shoulder having a circumferential abutment surface 224 for abutting the tip 214 of the first end 210 and a surface 228 for longitudinal abutment with the complementary surface 218 of the first end 210.

Other configurations are possible, however, it is preferable that the first and second ends 210, 220 are shaped for abutment both circumferentially and longitudinally.

The terms ring-shaped and ring assembly are not intended to limit the shape of the item to a strict torus, but merely mean to denote an item that can extend around the perimeter of the pipe.

The rim 110 may include a notch 140, for example in the abutment face 150 (as shown), and the retainer 200 may include a projection 240, located for engagement with the notch 140. In the alternative, the rim 110 may include a projection (for example in the same location as the notch is shown), and the retainer 200 may include a notch 240. In either case, the notch and projection may be located such that when they are engaged, the bores 115, 230 of the cover 100 and the retainer 200 are aligned. In particular, the cover 100 and the retainer 200 are rotationally aligned about the longitudinal axis, when the notch 140 and projection 240 are engaged.

The fastener 400 fastens the cover 100 to the retainer 200. The fastener 400 is exposed on the cover side of the bore of the rim such that it may be engaged by a tool or user to operate the fastener. For example, the tool could be a screwdriver that operates the fastener 400 by rotating it. Such rotation can operate the fastener 400 by threadably engaging the fastener 400 with the bore 230.

Preferably, the fastener 400 comprises a head portion 410 and a threaded portion 430, and optionally a stem portion 420. The stem portion 420 may be unthreaded. In some embodiments, the head portion 410 of the fastener 400 may have a greater outer diameter than the diameter of bore 115.

Preferably, the head portion 410 is shaped for rotational engagement by a tool. That is, a tool (such as a screwdriver or Allen key) may be engaged with the head portion 410 so that rotation of the tool rotates the fastener 400 and thereby engages or disengages the fastener 400 from the retainer 200.

The head portion 410 is at one end of the fastener 400 and the threaded portion 430 is at the opposite end of the fastener 400. The stem portion 420, when provided, links the head portion 410 to the threaded portion 430. When no stem portion 420 is provided, the threaded portion 430 extends all the way to the head portion 410.

When the protector assembly 1 is assembled, the bore 115 of the cover 100 aligns with the bore 230 of the retainer 200. The fastener 400 extends through the bore 115 of the rim 110 for threadable engagement with the bore 230 of the retainer 200.

The bore 230 through the retainer 200 is preferably formed in the material of the first and second ends without the provision of any form of insert made of different material.

In some embodiments, the fastener 400 threadably engages the bore 115 of the rim 110 as well as the bore 230 of the retainer 200. In such cases, no stem portion 420 is needed.

However, for speed of assembly, it is preferred that the bore 115 of the rim 110 does not include threads and is sized for the threaded portion 430 of the fastener 400 to be slid therethrough without the threads engaging the cover 100.

When the fastener 400 is fully inserted into the cover 100 (whether threadably engaged therewith or simply slid through), the threaded portion 430 extends beyond the abutment surface 150 of the rim 110. This protruding section of the fastener 400 can threadably engage the bore 230 of the ring assembly 200.

A counter bore or counter sink 116 may be provided such that the head 410 of the fastener 400 is within the rim 110 when the protector assembly 1 is assembled. Alternatively, the head 410 of the fastener 400 may be outside the rim 110. In either case, it is preferred that, when the protector assembly 1 is assembled, the head portion 410 is exposed on the closed end side of the rim 110 for engagement with a tool. As can be seen in Figure 3, the head portion 410 is exposed such that it is accessible from the closed end side of the cover 100.

Whilst above is described a single fastener 400, depending on the circumference of the pipe 300, it is preferable to provide more than one fastener 400. In preferred embodiments, the protector assembly 1 includes a plurality of fasteners, spaced around the periphery of the rim 110.

In embodiments in which the retainer 200 is formed as a ring assembly having a plurality of parts meeting at an overlap section 205 and one or more further overlap sections 206, it is preferable to provide a fastener 400 for each overlap section 205, 206. In particular, it is preferable to fasten each of the further overlap sections 206 with a fastener 400 in the same manner as the overlap section 205 shown in Figure 5 and described in connection therewith. Optionally, additional fasteners 400 may be provided to extend through the cover 100 and threadably engage the retainer 200 at a location other than at an overlap 205, 206.

In embodiments in which the retainer 200 is formed as a split ring, as shown in Figure 1, additional fasteners 400 may be provided to extend through the cover 100 and threadably engage the retainer 200 at one or more spaced apart locations other than at an overlap 205, 206. Such additional fasteners 400 may extend into threaded bores 232 through single parts of the retainer 200.

As shown in the figures, the protector assembly 1 forms a pipe protector assembly when installed on the pipe 300. The pipe protector assembly 1 comprises the cover 100, the retainer 200, the at least one fastener 400, and the pipe 300.

The pipe 300 includes a pipe body 310, which extends to the pin 305.

The pin 305 includes a terminal abutment surface 320 at the extreme end of the pipe 300 for abutment with the inside of the cover 120

Preferably, the pin 305 will have a tapered thread 335 for engagement with a female thread of a box and for engagement with a complementary thread 135 if this is formed on the internal surface of the cover 100. In such cases, the tubular portion 130 includes a tapered section, which tapers at the same angle as the thread of the pin 305. The inner surface of the tubular portion 130 may simply be smooth and overly the crests of the pin thread 335, or (as shown in the Figures) an internal coupling thread 135 may be formed on the inner surface of the tubular portion 130 for engagement with the thread 335 of the pin 305.

The pin 305 may have one or more shoulders 350, 360 along its length for axial abutment. For example, a forward facing shoulder 360 (forward facing meaning facing towards the terminal end of the pin 305) may be provided for abutting an internal shoulder of a box.

As another example, the rear surface of the pin 305 may be formed with a rear facing shoulder 350 (rear facing meaning facing away from the terminal end of the pin 305). The rear facing shoulder may be without utility in connecting the pin 305 to a box, but can be used for abutment with the retainer 200.

The cover 100 may comprise an internal shoulder 160 for abutment with the forward facing shoulder 360. This can provide good axial alignment of the cover 100 with the pin 305 when installed. The internal shoulder 160 may be formed on the internal surface of the rim 110, with the rim 110 extending longitudinally past the internal shoulder 160 (in a direction away from the cover 120) to the abutment face 150.

The abutment face 250 of the retainer 200 may extend radially inwardly for abutment not only with the abutment face 150 of the rim 110, but also with the rear facing shoulder 250. In such cases, the rim 110 preferably extends longitudinally (in a direction away from the cover 120) such that the abutment face 150 is aligned with the rear facing shoulder 350.

The circular opening 240 of the retainer 200 has a radius that is less than the outer diameter of the rear facing shoulder 350.

When both the forward facing shoulder 360 and the rear facing shoulder 350 are provided, the protector assembly 1 may be installed so as to abut the forward facing shoulder 360 and the rear facing shoulder 350 and thereby prevent axial movement of the protector assembly 1 relative to the pipe 300. The abutments with the shoulders 350, 360 of the pin can be of sufficient pressure to form seals to hinder or prevent ingress of fluid (e.g. liquid) into the cover 100 for thereby protecting the pin 305 from corrosion.

As explained above, the cover 100 and the retainer 200 may define an annular channel therebetween, for example, by virtue of the internal shoulder 160 of the cover 100 and the radially innermost region of the abutment face 250 of the retainer 200. That annular channel of the protector assembly 1 can receive a radial extension of the pin 305 for relative axial alignment of the pin 305 and the protector assembly 1.

In the alternative, or additionally, the pin 305 may include a radially extending groove into which a radially extending part of the protector assembly 1 may be inserted. For example, the retainer 200 may sit within the groove. Once the cover 100 is attached to such a retainer 200, the entire protector assembly 1 will be locked in an axial position.

The annular channel and/or radially extending part of the protector assembly 1 may be located at an axial distance from tapered thread 335 and/or complementary thread 135. In particular, the annular channel and/or radially extending part of the protector assembly 1 may be located closer to the open end 125 of the cover than the tapered thread 335 and/or the complementary thread 135.

An embodiment of the protector assembly 1 comprising the annular channel and/or radially extending part, wherein the to be protected pipe 300 comprises a complementary radial extension or complementary radially extending groove of the pin 305, works in particular well in combination with embodiments having one or more fasteners 400, wherein the head portion(s) 410 thereof is/are exposed.

The protector assembly 1 may be installed on the pin 305 of a threaded pipe 300 by a method that includes: covering the pin 305 with the cover 100; engaging the pipe body 310 with the retainer 200; and fastening the cover 100 to the retainer 200 with the threaded fastener 400.

The retainer 200 may be engaged with the pipe body 310 before or after the cover 100 covers the pin 305.

Covering the pin 305 with the cover 100 may involve sliding the cover 100 axially over the pin 305 and/or threadably engaging the internal coupling thread 135 with the thread 335 of the pin 305.

Covering the pin 305 with the cover 100 may comprise abutting the inner surface of the closed end 120 with the terminal abutment surface 320 and/or abutting the inner shoulder 160 with the forward facing shoulder 360.

Engaging the pipe body 310 with the retainer 200 surrounds the pipe body 310 with the opening 240 of the retainer 200.

In embodiments in which the retainer 200 is a split ring, engaging the pipe body 310 with the retainer 200 involves deforming the split ring and inserting the pipe body 310 between the first and second ends 210, 220. The split ring 200 is preferably formed of elastically deformable material so as to revert to its original shape once the pipe body 310 has been inserted.

In embodiments in which the retainer 200 is a ring assembly, engaging the pipe body 310 with the retainer 200 involves fastening the first and second parts 200a, 200b together around the pipe body 310. Specifically, the method may involve the step of fastening together the first and second ends 210, 220.

The first and second ends 210, 220 are preferably abutted longitudinally (in the direction of the longitudinal axis of the tubular portion 130 of the cover 100) and circumferentially (in the direction around the perimeter of the pipe body 310).

The retainer 200 and cover 100 may be rotationally aligned by insertion of a projection 240 of the retainer 200 into a notch 140 of the cover 100. Alternatively, the retainer 200 and cover 100 may be rotationally aligned by insertion of a projection of the cover 100 (not shown) into a notch of the retainer 200.

Fastening the cover 100 to the retainer 200 with the threaded fastener 400 may comprise engaging the cover 100, the first end 210 and the second end 220 with the threaded fastener 400. The second end 220 may be threadably engaged with the threaded fastener 400. Preferably, both the first and second ends 210, 220 are threadably engaged with the threaded fastener 400.

More preferably, the cover 100 is not threadably engaged with the threaded fastener 400. However, the fastener 400 is provided with a head portion 410 that abuts the cover 100 to fasten it to the retainer 200.

In embodiments in which a counter bore or counter sink 116 is provided in the cover 100, the fastener may be screwed into the bore 230 of the retainer 200 until the head portion 410 is entirely within the counter bore or counter sink 116.

In preferred embodiments, the threaded fastener 400 is inserted in the longitudinal direction (in the direction of the longitudinal axis of the tubular portion 130 of the cover 100), and is inserted through the rim 110 of the cover 100 from the side of the closed end 120. In this way, when a plurality of pipes 300 are stacked, the operator can carry out the installation of the protector assembly 1 from the end of the stack without hindrance by the other pipes 300 of the stack.

Preferably, a plurality of fasteners 400 are used to secure the cover 100 to the retainer 200.

Whereas in the description given above of the preferred embodiment, the retainer 200 is either a split-ring or a ring assembly, embodiments are contemplated in which one or more (preferably, at least three) independent retainer(s) 1200a, 1200b, 1200c, 1200d are provided. Figures 6a to 6c show an example.

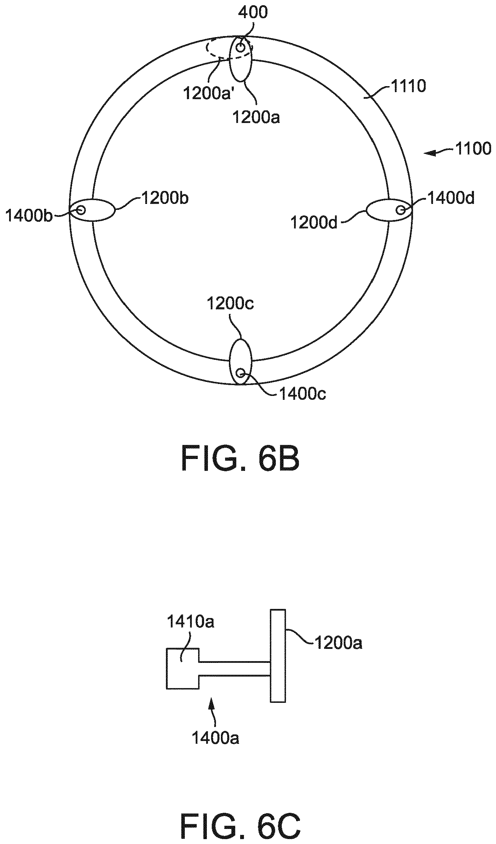

In Figure 6a, there can be seen a cover 1100 with a rim 1110 having a bore through which a fastener 1400a extends. As best seen in Figure 6c, the fastener 1400a extends to a retainer 1200a. The fastener 1400a is attached to the retainer 1200a such that they rotate together. As shown in Figure 6b, rotation of the retainer 1200a by rotating the fastener 1400a can rotate the retainer 1200a into a first position in which it extends radially inwardly and may engage an external shoulder of a pipe 1300, and can rotate the retainer 1200a into a second position in which it does not engage an external shoulder of a pipe 1300 (shown as 1200a' with dashed lines in Figure 6b).

The retainer 1200a may comprise a bore for receiving the fastener 1400a, or the fastener 1400a may engage the surface of the retainer 1200a.

The fastener 1400a preferably has a head portion 1410a for rotational engagement by a tool. That is, a tool (such as a screwdriver or Allen key) may be engaged with the head portion 1410a so that rotation of the tool rotates the fastener 1400a and thereby rotates the associated retainer 1200a between the first and second positions.

As with the fasteners described above, the fastener 1400 extends through the bore of the rim 1110 to engage the retainer 1200. The fastener 1400 extends substantially in parallel with the longitudinal axis of the cover 1100. The fastener 1400 is exposed on the cover side of the bore of the rim for engagement by a tool. Alternatively, in some embodiments, the fastener 1400a is exposed such that it may be grasped by a worker and rotated by hand.

In all of the above embodiments, because the fastener is exposed on the closed end side of the protector assembly, the user mounting the cover assembly on a pipe can lock the cover in place using the retainer by manipulation of the fastener on the closed end side, without needing to access the open end side (opposite the closed end side) of the cover.

## Claims

1. A protector assembly for covering a pin (305) of a threaded pipe (300), comprising a cover (100), a retainer (200) and at least one fastener (400) for fastening the retainer (200) to the cover (100), wherein:
the cover (100) includes a tubular portion (130) defining a longitudinal axis from a closed end (130) to an open end (125), the open end (125) defining a rim (110) for axial abutment with the retainer (200);
the retainer (200) has an abutment face (250) for abutment with the rim (110);
the rim (110) comprises at least one bore (115) extending therethrough;
a fastener (400) extends through the bore (115) of the rim (110) and engages the retainer (200), the fastener (400) extending substantially in parallel with the longitudinal axis and exposed on the cover side of the bore (115) of the rim (110) for engagement by a tool or user to operate the fastener (400),
**characterised in that**
the fastener (400) threadably engages with the bore (110) of the retainer (200); or
the fastener (1400a) engages the surface of the retainer (1200a).

2. The protector assembly of claim 1, wherein the retainer (200) comprises a bore (230) extending into the abutment face (250) aligned with the bore (115) of the rim (100).

3. The protector assembly of claim 1 or claim 2, wherein:
the rim (115) has a rim face for axial abutment with the abutment face (250) of the retainer (200); and
the rim face and abutment face (250) of the retainer (200) are perpendicular to the longitudinal axis for mutual abutment.

4. The protector assembly of any preceding claim, wherein the retainer (200) has a circular opening for extending around the circumference of a pipe (300).

5. The protector assembly of any preceding claim, wherein the fastener (400) comprises a head portion (410) at one end and a threaded portion (430) at an opposite end, the threaded portion (430) extends from the rim (110) to engage the bore (115) of the retainer (100).

6. The protector assembly of claim 5, wherein the head portion (410) is shaped for rotational engagement by a tool and is exposed on the closed end side of the rim (110).

7. The protector assembly of any preceding claim, wherein:
the retainer (200) is ring-shaped and includes at least first and second ends (210, 220) meeting at an overlap section;
the bore (250) extends through the overlap section (205); and
the fastener (400) threadably engages the bore (250) of the retainer to fasten together the first and second ends (210, 220).

8. The protector assembly of claim 7, wherein the retainer (200) is a split ring having the first and second ends (210, 220).

9. The protector assembly of claim 7, wherein the retainer (200) is a ring assembly comprising a first part (200a) having the first end (210) and a second part (200b) having the second end (220).

10. The protector of any one of claims 7 to 9, wherein the first and second ends (210, 220) define interfitting shoulders that abut in the circumferential direction around the ring-shape of the retainer and overlap to form the overlap section (205).

11. The protector of any preceding claim, wherein one of the rim (110) and the abutment surface (250) of the retainer (200) includes a notch (140) and the other of the rim (110) and the abutment surface (250) of the retainer includes a complementary protrusion engaging the notch (140).

12. The protector assembly of any preceding claim, comprising a plurality of fasteners (400) and a complementary plurality of bores (115) of the rim (110) and retainer (200), the fasteners (400) and bores (115) spaced around the periphery of the rim (110).

13. The protector of any preceding claim, wherein:
the cover (100) and the retainer (200) define a channel therebetween for receiving a radially outwardly extending protrusion of the pin (305); or
the protector assembly, preferably the retainer, comprises a radially-inward extension for extending into a radial groove of the pin (305).

14. The protector of any preceding claim, wherein the cover (100) includes an internal shoulder (160) for abutment with a corresponding shoulder (360) on a pin (305) of a threaded connector.

15. The protector of any preceding claim, wherein the cover (100) comprises an internal thread for engagement with the threads of a pin, the internal thread formed in the inner surface of the tubular portion.

16. The protector of any preceding claim, wherein the cover (100) is free of an insert.

17. A method of assembling a protector assembly (1) according to any preceding claim on a pin (305) of a threaded pipe (300), comprising the steps of:
covering the pin (305) of the threaded connector with a cover (100) having a closed end (130) and an open end (125) defining a rim (110);
engaging the pipe body (310) with a retainer (200) such that the retainer (200) surrounds the pipe body (310);
inserting a threaded fastener (400) through the rim (110) of the cover (100) from the closed end side; and
threadably engaging the retainer (200) with the threaded fastener (400); or rotate the retainer (1200a) by rotating the fastener (1400a) into a first position in which it extends radially inwardly and may engage an external shoulder of a pipe.

18. The method of claim 17, wherein the cover (100) comprises an internal thread for engagement with a pin thread of the pin (305), the method further comprising screwing the internal thread onto the pin thread (305).

19. The method of claim 17 or claim 18, wherein the retainer (200) is a split ring with first and second ends (210, 220), and the step of threadably engaging the retainer (200) with the threaded fastener (400) comprises threadably engaging the first and second ends (210, 220) with the threaded fastener (400).

20. The method of claim 19, further comprising deforming the split ring and inserting the pipe body (310) between the first and second ends (210, 220).

21. The method of claim 17 or claim 18, wherein the retainer (200) is a ring assembly comprising first and second parts (200a, 200b), and threadably engaging the retainer (200) with the threaded fastener (400) comprises threadably engaging a bore of the first part and a bore of the second part with the threaded fastener (400).

22. The method of claim 21, further comprising assembling the ring assembly around the pipe body (310).

## Patentansprüche

1. Schutzvorrichtung zum Abdecken eines Anschlusses (305) eines Gewinderohrs (300), umfassend eine Abdeckung (100), einen Halter (200) und mindestens ein Befestigungselement (400) zum Befestigen des Halters (200) an der Abdeckung (100), wobei:
die Abdeckung (100) einen rohrförmigen Abschnitt (130) umfasst, der eine Längsachse von einem geschlossenen Ende (130) zu einem offenen Ende (125) definiert, wobei das offene Ende (125) einen Bund (110) zur axialen Anlage an dem Halter (200) definiert;
der Halter (200) eine Anlagefläche (250) zur Anlage an dem Bund (110) aufweist;
der Bund (110) mindestens eine sich durch diesen erstreckende Bohrung (115) umfasst;
ein Befestigungselement (400) durch die Bohrung (115) des Randes (110) verläuft und mit dem Halter (200) in Eingriff steht, wobei das Befestigungselement (400) im Wesentlichen parallel zur Längsachse verläuft und auf der Abdeckungsseite der Bohrung (115) des Bundes (110) für den Eingriff durch ein Werkzeug oder einen Benutzer zum Betätigen des Befestigungselements (400) freiliegt,
**dadurch gekennzeichnet, dass**
das Befestigungselement (400) mit der Bohrung (110) des Halters (200) in Gewindeeingriff steht; oder
das Befestigungselement (1400a) mit der Oberfläche des Halters (1200a) in Eingriff steht.

2. Schutzvorrichtung nach Anspruch 1, bei der der Halter (200) eine Bohrung (230) umfasst, die sich in die mit der Bohrung (115) des Bundes (100) fluchtende Anlagefläche (250) erstreckt.

3. Schutzvorrichtung nach Anspruch 1 oder 2, bei der:
der Bund (115) eine Bundfläche zur axialen Anlage an der Anlagefläche (250) des Halters (200) aufweist; und
die Bundfläche und die Anlagefläche (250) des Halters (200) zum Anliegen aneinander auf der Längsachse senkrecht stehen.

4. Schutzvorrichtung nach einem der vorhergehenden Ansprüche, bei der der Halter (200) eine kreisförmige Öffnung zum Umgeben des Umfangs eines Rohrs (300) aufweist.

5. Schutzvorrichtung nach einem der vorhergehenden Ansprüche, bei der das Befestigungselement (400) an einem Ende einen Kopfabschnitt (410) und an einem gegenüberliegenden Ende einen Gewindeabschnitt (430) umfasst, wobei sich der Gewindeabschnitt (430) von dem Bund (110) aus erstreckt, um in die Bohrung (115) des Halters (100) einzugreifen.

6. Schutzvorrichtung nach Anspruch 5, bei der der Kopfabschnitt (410) für einen drehenden Eingriff durch ein Werkzeug geformt ist und an der Seite des geschlossenen Endes des Bundes (110) freiliegt.

7. Schutzvorrichtung nach einem der vorhergehenden Ansprüche, bei der:
der Halter (200) ringförmig ist und mindestens ein erstes und ein zweites Ende (210, 220) umfasst, die an einem Überlappungsabschnitt zusammentreffen;
die Bohrung (250) durch den Überlappungsabschnitt (205) hindurch verläuft; und
das Befestigungselement (400) mit der Bohrung (250) des Halters im Gewindeeingriff steht, um das erste und das zweite Ende (210, 220) aneinander zu befestigen.

8. Schutzvorrichtung nach Anspruch 7, bei der der Halter (200) ein Spaltring mit einem ersten und einem zweiten Ende (210, 220) ist.

9. Schutzvorrichtung nach Anspruch 7, bei der der Halter (200) eine Ringanordnung ist, die einen ersten Teil (200a) mit dem ersten Ende (210) und einen zweiten Teil (200b) mit dem zweiten Ende (220) umfasst.

10. Schutzvorrichtung nach einem der Ansprüche 7 bis 9, bei der das erste und das zweite Ende (210, 220) ineinander passende Schultern definieren, die in Umfangsrichtung um die Ringform des Halters aneinanderstoßen und überlappen, um den Überlappungsabschnitt (205) zu bilden.

11. Schutzvorrichtung nach einem der vorhergehenden Ansprüche, bei der entweder der Bund (110) oder die Anlagefläche (250) des Halters (200) eine Kerbe (140) aufweist und das jeweils andere von Bund (110) und Anlagefläche (250) des Halters einen komplementären Vorsprung aufweist, der in die Kerbe (140) eingreift.

12. Schutzvorrichtung nach einem der vorhergehenden Ansprüche, die eine Mehrzahl von Befestigungselementen (400) und eine komplementäre Mehrzahl von Bohrungen (115) des Bundes (110) und des Halters (200) umfasst, wobei die Befestigungselemente (400) und Bohrungen (115) um den Umfang des Bundes (110) herum beabstandet sind.

13. Schutzvorrichtung nach einem der vorhergehenden Ansprüche, bei der:
die Abdeckung (100) und der Halter (200) zwischen sich einen Kanal zur Aufnahme eines sich radial nach außen erstreckenden Vorsprungs des Stutzens (305) definieren; oder die Schutzvorrichtung, vorzugsweise der Halter, eine radial nach innen gerichtete Verlängerung umfasst, die sich in eine radiale Nut des Stutzens (305) erstreckt.

14. Schutzvorrichtung nach einem der vorhergehenden Ansprüche, bei der die Abdeckung (100) eine innere Schulter (160) zur Anlage an einer entsprechenden Schulter (360) an einem Stutzen (305) eines Gewindeanschlusses umfasst.

15. Schutzvorrichtung nach einem der vorhergehenden Ansprüche, bei der die Abdeckung (100) ein Innengewinde zum Eingriff mit dem Gewinde eines Stutzens umfasst, wobei das Innengewinde an der Innenfläche des rohrförmigen Abschnitts ausgebildet ist.

16. Schutzvorrichtung nach einem der vorhergehenden Ansprüche, bei der die Abdeckung (100) keinen Einsatz aufweist.

17. Verfahren zum Anbringen einer Schutzvorrichtung (1) nach einem der vorhergehenden Ansprüche an einem Stutzen (305) eines Gewinderohrs (300), mit den Schritten:
Abdecken des Stutzens (305) des Gewindeanschlusses mit einer Abdeckung (100), die ein geschlossenes Ende (130) und ein offenes Ende (125) aufweist, das einen Bund (110) definiert;
Ineingriffbringen des Rohrkörpers (310) mit einem Halter (200), so dass der Halter (200) den Rohrkörper (310) umgibt;
Einführen eines Gewindebefestigungselements (400) durch den Bund (110) der Abdeckung (100) von der Seite des geschlossenen Endes aus; und
In Gewindeeingriff Bringen des Halters (200) mit dem Gewindebefestigungselement (400); oder Drehen des Halters (1200a) durch Drehen des Befestigungselements (1400a) in eine erste Position, in der es sich radial nach innen erstreckt und an eine äußere Schulter eines Rohrs angreifen kann.

18. Verfahren nach Anspruch 17, bei dem die Abdeckung (100) ein Innengewinde zum Eingriff mit einem Stutzengewinde des Stutzens (305) umfasst, wobei das Verfahren ferner das Aufschrauben des Innengewindes auf das Stutzengewinde (305) umfasst.

19. Verfahren nach Anspruch 17 oder 18, bei dem der Halter (200) ein Spaltring mit einem ersten und einem zweiten Ende (210, 220) ist und der Schritt des Verschraubens des Halters (200) mit dem Gewindebefestigungselement (400) das Verschrauben des ersten und des zweiten Endes (210, 220) mit dem Gewindebefestigungselement (400) umfasst.

20. Verfahren nach Anspruch 19, das ferner das Verformen des Spaltrings und das Einsetzen des Rohrkörpers (310) zwischen dem ersten und dem zweiten Ende (210, 220) umfasst.

21. Verfahren nach Anspruch 17 oder 18, bei dem der Halter (200) eine Ringanordnung ist, die ein erstes und ein zweites Teil (200a, 200b) umfasst, und das Verschrauben des Halters (200) mit dem Gewindebefestigungselement (400) das Verschrauben einer Bohrung des ersten Teils und einer Bohrung des zweiten Teils mit dem Gewindebefestigungselement (400) umfasst.

22. Verfahren nach Anspruch 21, das ferner das Anbringen der Ringanordnung um den Rohrkörper (310) umfasst.

## Revendications

1. Ensemble protecteur pour recouvrir une partie femelle (305) d'un tube fileté (300), comprenant un couvercle (100), un élément de retenue (200) et au moins une attache (400) pour attacher l'élément de retenue (200) au couvercle (100), dans lequel :
le couvercle (100) comporte une portion tubulaire (130) définissant un axe longitudinal, d'une extrémité fermée (130) à une extrémité ouverte (125), l'extrémité ouverte (125) définissant un rebord (110) pour une mise en butée axiale avec l'élément de retenue (200) ;
l'élément de retenue (200) possède une face de mise en butée (250) pour une mise en butée avec le rebord (110) ;
le rebord (110) comprend au moins un alésage (115) s'étendant à travers celui-ci ;
une attache (400) s'étend à travers l'alésage (115) du rebord (110) et se met en prise avec l'élément de retenue (200), l'attache (400) s'étendant sensiblement parallèlement à l'axe longitudinal et étant exposée sur le côté couvercle de l'alésage (115) du rebord (110) pour une mise en prise par un outil ou un utilisateur pour actionner l'attache (400),
**caractérisé en ce que**
l'attache (400) se met en prise par filetage avec l'alésage (110) de l'élément de retenue (200) ; ou
l'attache (1400a) se met en prise avec la surface de l'élément de retenue (1200a).

2. Ensemble protecteur selon la revendication 1, dans lequel l'élément de retenue (200) comprend un alésage (230) s'étendant dans la face de mise en butée (250), aligné avec l'alésage (115) du rebord (100).

3. Ensemble protecteur selon la revendication 1 ou la revendication 2, dans lequel :
le rebord (115) possède une face de rebord pour une mise en butée axiale avec la face de mise en butée (250) de l'élément de retenue (200) ; et
la face de rebord et la face de mise en butée (250) de l'élément de retenue (200) sont perpendiculaires à l'axe longitudinal pour une mise en butée mutuelle.

4. Ensemble protecteur selon une quelconque revendication précédente, dans lequel l'élément de retenue (200) possède une ouverture circulaire pour s'étendre autour de la circonférence d'un tube (300).

5. Ensemble protecteur selon une quelconque revendication précédente, dans lequel l'attache (400) comprend une portion de tête (410) à une extrémité et une portion filetée (430) à une extrémité opposée, la portion filetée (430) s'étend à partir du rebord (110) pour se mettre en prise avec l'alésage (115) de l'élément de retenue (100).

6. Ensemble protecteur selon la revendication 5, dans lequel la portion de tête (410) est mise en forme pour une mise en prise en rotation par un outil et est exposée sur le côté d'extrémité fermée du rebord (110).

7. Ensemble protecteur selon une quelconque revendication précédente, dans lequel :
l'élément de retenue (200) est en forme de bague et comporte au moins des première et seconde extrémités (210, 220) se rejoignant au niveau d'une section de chevauchement ;
l'alésage (250) s'étend à travers la section de chevauchement (205) ; et
l'attache (400) se met en prise par filetage avec l'alésage (250) de l'élément de retenue pour attacher ensemble les première et seconde extrémités (210, 220).

8. Ensemble protecteur selon la revendication 7, dans lequel l'élément de retenue (200) est une bague fendue ayant les première et seconde extrémités (210, 220).

9. Ensemble protecteur selon la revendication 7, dans lequel l'élément de retenue (200) est un ensemble bague comprenant une première partie (200a) ayant la première extrémité (210) et une seconde partie (200b) ayant la seconde extrémité (220).

10. Protecteur selon l'une quelconque des revendications 7 à 9, dans lequel les première et seconde extrémités (210, 220) définissent des épaulements emboîtés qui sont en butée dans la direction circonférentielle autour de la forme de bague de l'élément de retenue et se chevauchent pour former la section de chevauchement (205).

11. Protecteur selon une quelconque revendication précédente, dans lequel l'un parmi le rebord (110) et la surface de mise en butée (250) de l'élément de retenue (200) comporte une encoche (140) et l'autre parmi le rebord (110) et la surface de mise en butée (250) de l'élément de retenue comporte une saillie complémentaire qui se met en prise avec l'encoche (140).

12. Ensemble protecteur selon une quelconque revendication précédente, comprenant une pluralité d'attaches (400) et une pluralité complémentaire d'alésages (115) du rebord (110) et de l'élément de retenue (200), les attaches (400) et les alésages (115) étant espacés autour de la périphérie du rebord (110).

13. Protecteur selon une quelconque revendication précédente, dans lequel :
le couvercle (100) et l'élément de retenue (200) définissent un canal entre eux pour recevoir une saillie s'étendant radialement vers l'extérieur de la partie femelle (305) ; ou
l'ensemble protecteur, de préférence l'élément de retenue, comprend une extension radialement vers l'intérieur pour s'étendre dans une rainure radiale de la partie femelle (305) .

14. Protecteur selon une quelconque revendication précédente, dans lequel le couvercle (100) comporte un épaulement interne (160) pour une mise en butée avec un épaulement (360) correspondant sur une partie femelle (305) d'un raccord fileté.

15. Protecteur selon une quelconque revendication précédente, dans lequel le couvercle (100) comprend un filetage interne pour une mise en prise avec les filetages d'une partie femelle, le filetage interne étant formé dans la surface interne de la portion tubulaire.

16. Protecteur selon une quelconque revendication précédente, dans lequel le couvercle (100) est dépourvu d'un insert.

17. Procédé d'assemblage d'un ensemble protecteur (1) selon une quelconque revendication précédente sur une partie femelle (305) d'un tube fileté (300), comprenant les étapes suivantes :
le recouvrement de la partie femelle (305) du raccord fileté avec un couvercle (100) ayant une extrémité fermée (130) et une extrémité ouverte (125) définissant un rebord (110) ;
la mise en prise du corps de tube (310) avec un élément de retenue (200) de sorte que l'élément de retenue (200) encercle le corps de tube (310) ;
l'insertion d'une attache filetée (400) à travers le rebord (110) du couvercle (100) par le côté d'extrémité fermée ; et
la mise en prise par filetage de l'élément de retenue (200) avec l'attache filetée (400) ; ou la rotation de l'élément de retenue (1200a) par la rotation de l'attache (1400a) jusque dans une première position dans laquelle il s'étend radialement vers l'intérieur et peut se mettre en prise avec un épaulement externe d'un tube.

18. Procédé selon la revendication 17, dans lequel le couvercle (100) comprend un filetage interne pour une mise en prise avec un filetage de partie femelle de la partie femelle (305), le procédé comprenant en outre le vissage du filetage interne sur le filetage de partie femelle (305).

19. Procédé selon la revendication 17 ou la revendication 18, dans lequel l'élément de retenue (200) est une bague fendue dotée de première et seconde extrémités (210, 220), et l'étape de la mise en prise par filetage de l'élément de retenue (200) avec l'attache filetée (400) comprend la mise en prise par filetage des première et seconde extrémités (210, 220) avec l'attache filetée (400).

20. Procédé selon la revendication 19, comprenant en outre la déformation de la bague fendue et l'insertion du corps de tube (310) entre les première et seconde extrémités (210, 220).

21. Procédé selon la revendication 17 ou la revendication 18, dans lequel l'élément de retenue (200) est un ensemble bague comprenant des première et seconde parties (200a, 200b), et la mise en prise par filetage de l'élément de retenue (200) avec l'attache filetée (400) comprend la mise en prise par filetage d'un alésage de la première partie et d'un alésage de la seconde partie avec l'attache filetée (400).

22. Procédé selon la revendication 21, comprenant en outre l'assemblage de l'ensemble bague autour du corps de tube (310).
